# EUROPEAN PATENT SPECIFICATION

(11) **EP 1 238 579 B1**
(45) Date of publication and mention of the grant of the patent: **05.04.2006**
(21) Application number: 01105749.4
(22) Date of filing: 08.03.2001
(51) Int. Cl.: A01D 41/12

(54) **Crop width measuring means**
Mittel zur Messung der Schnittbreite von Erntegut
Moyens pour mesurer la largeur de coupe de récolte

(43) Date of publication of application: 11.09.2002
(73) Proprietor: DEERE & COMPANY, Moline, Illinois 61265-8098 (US)
(72) Inventor: Blackmore, Simon, Flitton, Bedordshire (GB); Godwin, Richard J., Silsoe, Bedordshire (GB); Pullen, David W.M., Silsoe, Bedford MK45 4DT (GB); Wheeler, Paul N., Nr.Hitchin, Hertfordshire (GB)
(74) Representative: Holst, Sönke

(56) References cited:
- EP-A- 0 960 557
- DE-A- 2 608 049
- US-A- 5 606 504
- SOVIET INVENTIONS ILLUSTRATED Section PQ, Week 8014, 14 May 1980 (1980-05-14) Derwent Publications Ltd., London, GB; Class P12, AN d0944c XP002172007 & SU 676 216 A (BEZHETSKSELMASH), 30 July 1979 (1979-07-30)
- REITZ P: "ERTRAGSKARTIERUNG" LANDTECHNIK,DE,VERLAG EDUARD F.BECKMANN KG. LEHRTE, HANNOVER, vol. 47, no. 6, 1 June 1992 (1992-06-01), pages 273-276, XP000273191 ISSN: 0023-8082

## Description

The invention refers to an agricultural machine according to the precharacterizing part of claim 1.

Crop management decisions are increasingly based on the information presented in yield maps. Thus, it is important that they are accurate and contain as few errors as possible. However, two systematic errors occur in existing methods of producing yield maps caused by difficulties in defining the start and end of cutting and knowing the crop width entering the agricultural implement, as a combine. In order to produce error-free yield maps it is necessary to have an accurate and reliable method of detecting the start and end of harvesting and the width of newly harvested material entering the agricultural harvester.

In the prior art, a number of proposals were made to resolve this problem.

One existing method of detecting the start and end of cutting is to monitor whether the table or header is raised or lowered (US 5 524 424 A, EP 0 960 558 A). However, its accuracy depends on the operator's ability to lower and raise the table at a constant distance from the crop ends. Other methods have been used for measuring crop flow but as currently conceived they are unreliable:

Some harvesters have a set of buttons that allow the operator to record the proportional width of the header being full of crop. If the operator does not use these buttons consistently and accurate, then it will cause further errors (S. Blackmore and M. Moore, Remedial Correction of Yield Map Data, Precision Agriculture, 1999, Kluwer, Vol. 1, pages 53-66).

An automatic measurement of the swath width by means of ultrasonic sensors and a determination of the effective harvest area from combine position data generated using GPS is discussed by K. Sudduth et al, Ultrasonic and GPS Measurement of Combine Swath Width, ASAE Annual International Meeting, Orlando, Florida, USA, 12-16 July 1998, ASAE Paper No 983096. A measurement of the cutting width using ultrasonic or mechanic sensors is also described in P. Reitz, Ertragskartierung, Landtechnik Jahrgang 47 (1992), Pages 273-276.

In EP 0 960 558 A, a method for generating yield maps is proposed, in which the presence of crop to be harvested in front of a header is indicated by a sensor monitoring the position of the reel on the combine's header. Additionally, ultrasonic distance sensors measure the width of the harvested crop swath. Thus, on both side ends of the header, ultrasonic distance sensors submit ultrasonic waves to the swath, and the swath width is determined based on the run time of the ultrasonic waves. This method is not working reliably when two swaths with a space between them are taken up. The ultrasonic sensors do not work when the crop is lodged.

DE 195 43 343 A discloses a baler in which the volume of received crop is measured by a capacitive sensor. DE 40 41 995 A proposes a forage harvester in which presence of crop throughput is detected by means of a capacitive sensor. According to the signal of the sensor, the rotational speed of the chopping drum of the forage harvester is controlled, or conservation chemicals are added to the harvested crop.

SU 676 216 A and the corresponding abstract published by Derwent Publications Ltd., London, GB in Soviet Inventions Illustrated propose an output monitor for a harvesting machine. The monitor comprises a number of material presence sensors distributed over the width of the harvesting machine in the range the crop is harvested. The effective width of the received material is obtained by adding the signals of the respective sensors. The effective width is multiplied with the signal from a path sensor in order to obtain information on the total harvested area.

The object of the present invention is to provide an apparatus for establishing a yield map having an improved precision and reliability.

A number of crop presence sensors are distributed over the width of a crop receiving and/or processing means of the agricultural machine.

Preferably, the crop presence sensors are evenly distributed of the width. It would also be possible to have an uneven distribution. Each one of the crop presence sensors is capable of detecting whether crop is present in its detection range. The size of the detection range depends on the type of the crop presence sensor. It is possible to use crop presence sensors having a relatively large detection range, as ultrasonic sensors covering a part of the width of the crop receiving means, or to use crop presence sensors with a relatively small detection range. The latter only detect crop passing in their vicinity. According to the signals of the crop presence sensors, the crop width measuring means is operable to establish an information regarding the width of the-crop actually being taken up or processed (e.g. mown). The established swath width can be calculated by adding the width of the detection ranges of the crop presence sensors detecting crop (when the detection range is relatively large), or by multiplying the distance between adjacent sensors with the number of sensors detecting crop. The crop width measuring means according to the present invention is capable of detecting when two swaths with a gap between them are received.

Possible errors in the established swath width could be due to crop remaining in the detection range of the crop presence sensors. Such crop should not influence the information provided by the crop presence sensor. In order to resolve this problem, the invention teaches to arrange the crop presence sensor such that moving crop removes (wipes) any stationary crop away from the crop presence sensor. This is achieved by locating the outer surface of the crop presence sensor in the plane of the surface of the crop receiving and/or processing means. When the latter is a header of a combine or forage harvester, the outer surface of the crop presence sensor thus lies within the plane of the bed of the header's table.

Additionally, the signal from the crop presence sensor can be electronically processed by means of a signal processor to remove the effect of any stationary crop actuating the crop presence sensor. Thus, the output signal of the crop presence sensor can be time differentiated and afterwards submitted to a comparator or Schmidt-Trigger.

Capacitive sensors are preferably used as relatively cheap and compact crop presence sensors having a small detection range. They also work in conditions when crop is lodged.

The crop width measuring means according to the invention can be used in an apparatus for collecting data concerning crop received and/or processed by an agricultural machine. Such a harvest data generation apparatus comprises a location and/or distance measuring means, as a GPS sensor and/or a speed sensor. Further, a processor connected to the location and/or distance measuring means and to the crop width measuring means is provided for processing data. In a simple embodiment, only the area from which crop is received or harvested is established by the processor. In order to establish the area, an information regarding the swath width is necessary. The swath width sensor of the present invention establishes this information. Thus, the disadvantages of conventional hectare counters - dependence on position of the header and unknown swath width, see US 5 524 424 A - are avoided.

Preferably, the apparatus for collecting data is operable to establish a yield map. Thus, a parameter measuring means for measuring a parameter of the received and/or processed crop (as weight per time or moisture) is delivering data to the processor. From these data, the processor establishes a map representative of a variable derived from the parameter at several locations of the field. This variable can be the weight of the received crop per area, which is calculated according to the measured received weight per time, the swath width and the speed or position. The area is calculated using the signals from the crop width measuring means. Hence, errors in the yield map due to unknown swath width - as described above - are avoided.

The signals from the crop presence sensor can also be used to determine whether crop is received at all, and thus yields an information defining the start and end of cutting. An accurate definition of cutting (or no cutting) is as important as measuring crop width in producing an accurate yield map. Unless at least one crop presence sensor indicates the presence of crop, the yield established by the processor is considered as zero.

The invention can be used in any type of crop receiving and/or processing machine. Preferably, it is used on a combine, wherein the crop presence sensors are distributed over the active width of a cutter bar of a header of the combine. It could also be used in a forage harvester, the sensors distributed over the width of a corn header. Use of the invention on mowers and any other agricultural machine processing, receiving, taking up or harvesting crop is possible.

In the figures, a preferred embodiment of the invention is shown which is discussed in more detail in the following. The figures show in:
- Fig. 1: a side view of an agricultural axial flow combine,
- Fig. 2: a top view of the header of the combine,
- Fig. 3: a cross section of the header,
- Fig. 4: a cross section of a crop presence sensor embedded into the table of the header,
- Fig. 5: a cross section of a crop presence sensor located above the upper surface of the table of the header,
- Fig. 6: a cross section of a crop presence sensor located below a stone ridge of the header,
- Fig. 7: a cross section of a crop presence sensor integrated into the stone ridge of the header,
- Fig. 8: a top view of the header of the combine with another embodiment of crop presence sensors.

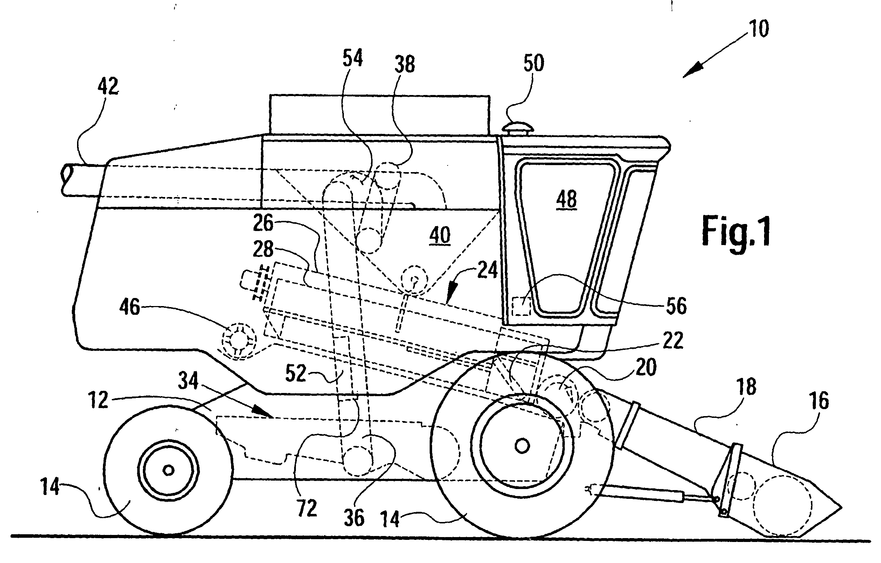

Figure 1 shows an agricultural combine 10 with a chassis 12 and running wheels 14 supporting it on the ground. A header 16 is used to take up crop and to conduct it to a feederhouse 18. The crop is conducted by the feederhouse 18 to a beater 20. The beater 20 guides the crop upward through an intake transition region 22 to a rotary thresher and separator 24. Although the invention is described on the example of a rotary combine, it can also be applied to other combines with an elevator for clean grain such as conventional straw walker machines.

The rotary thresher and separator 24 comprises a rotor housing 26 and a rotor 28 arranged in the rotor housing 26. The harvested crop enters the rotor housing 26 through the intake transition region 22. The rotary thresher and separator 24 threshes and separates the harvested crop. Grain and chaff fall through grates at the bottom of the rotor housing into a cleaning system 34. The cleaning system 34 removes the chaff and conducts the clean grain to a grain elevator 36 which conducts it in turn to a distributing screw conveyor 38. The distributing screw conveyor 38 deposits the clean grain in a grain tank 40. The clean grain in the grain tank 40 can be unloaded through an unloading screw conveyor 42 into a trailer or truck. Threshed straw separated from the grain is conducted out of the rotary thresher and separator 24 through an outlet to a discharge beater 46. The discharge beater 46 ejects the straw at the rear end of the combine 10.

The operation of the combine 10 is controlled from an operator's cab 48. A receiver 50 for the reception of GPS signals (global positioning system) is attached above the operator's cab 48. Although it is at least in principle not necessary, when the accuracy of the receiver 50 is sufficient, a speed sensor measuring the speed of the wheels 14 can be provided. Mounted on one side of the grain elevator 36 is a measurement capacitor 52 for measuring the moisture of the grain. Such a sensor is disclosed in DE 199 34 881 A. A flow sensor 54 is located at the outlet of the grain elevator 36. The flow sensor 54 comprises an impeller plate mounted for rotation about a horizontal axis. Its deflection depends on the mass flow rate of the harvested crop. The deflection of the impeller plate is measured and thus data on the mass flow rate of the harvested grain is provided. Such a sensor is described in EP 0 853 234 A and the documents recited therein.

A processor 56 located in the operator's cab 48 (or somewhere else on the combine 10) is connected to the GPS receiver 50, the measurement capacitor 52, the flow sensor 54, and the speed sensor, when present. The processor 56 is provided with an internal clock or receives external time signals, for example from the receiver 50. The processor 56 records the amount of harvested grain (measured by means of the flow sensor 54) and its moisture (measured by means of the measurement capacitor 52) dependent on the geographical position of the combine 10 (measured by means of the GPS receiver 50). The processor 56 logs the data and produces a field summary. Thus, it is possible to create a yield map with the logged data, whereby other software is used.

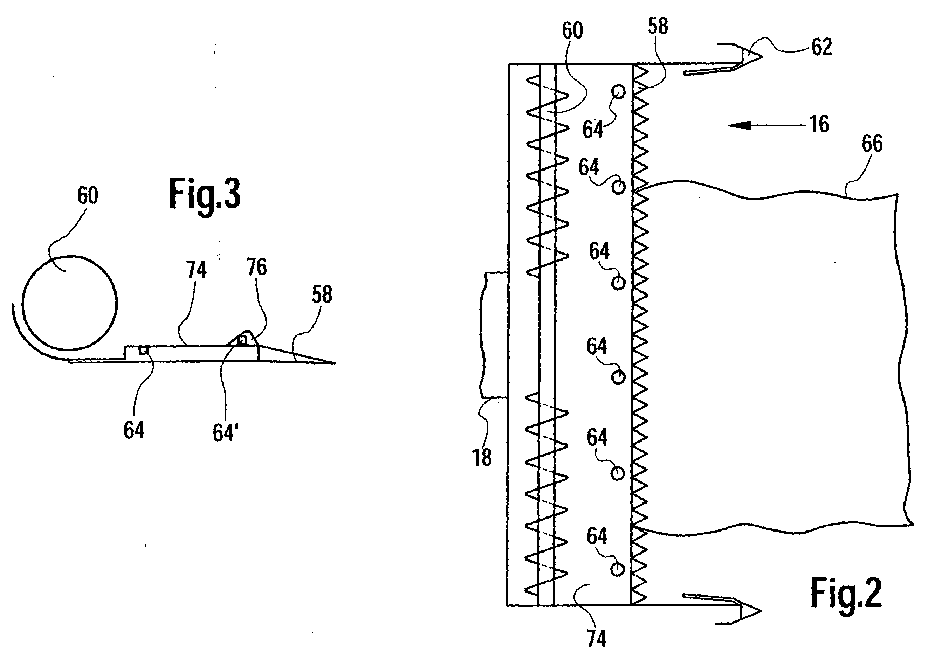

In order to reduce errors during generating the yield map, the header 16 is provided with a swath width sensing arrangement as shown in figure 2. The swath width sensing arrangement is submitting data to the processor 56, preferably by means of a bus, cables, optical fibres or electromagnetic waves. Thus, the actual width of the harvested swath is measured and considered when the yield map is generated. The processor 56 thus considers when the swath of harvested crop is narrower than the active width of the header 16, what might happen at an end of a field, or when the combine 10 passes certain parts of a field a second time. The processor 56 is capable of calculating a correct yield, since the latter depends on the amount of harvested grain and on the area on which it was harvested. This area depends on the swath width measured by the swath width sensing arrangement.

The header 16 comprises between its side sheets a cutter bar 58 for cutting the crop and an auger 60 for feeding the cut crop to the centre of header 16, where the crop is fed into the feederhouse 18. At the front end of the side sheets 60, crop dividers 62 are located. The dividers 62 are driven into the crop for splitting the crop sideways in front of the header 16 before it is cut by the cutter bar 58. The latter defines the active width of the header. Although not shown, a conventional reel is usually located above the cutter bar 58.

In the header's 16 forward direction behind the cutter bar 58, a number of crop presence sensors 64 for detecting the presence of crop are distributed of the width of the header 16. The crop presence sensors 64 submit data containing an information whether crop is in their detection range (or not) to the processor 56. In the embodiment shown in figure 2, six crop presence sensors 64 are evenly distributed over the active width of the header 16. A swath of crop to be harvested is indicated with reference numeral 66. Since in figure 2 the two uppermost crop presence sensors 64 (the most left sensors in the forward moving direction of the header 16) are not within the swath width, they will provide the processor 56 with a signal indicating the lack of crop. The three crop presence sensors 64 shown in figure 2 below the two uppermost crop presence sensors 64 are within the swath width. Thus, they submit a signal to the processor 56 indicating that crop is presently harvested at their location. Finally, the lowermost crop presence sensor 64 shown at the bottom of figure 2 (the most right sensor in the forward moving direction of the header 16) is outside the swath width, as well, and submits a corresponding signal to the processor 56.

The crop presence sensors 64 distributed over the active width of the header 16 thus provide an information on the width of the harvested swath to the processor 56. According to the information provided by the crop presence sensors 64, the processor 56 is operable to determine the width of the swath 66. The processor 56 is also operable to detect whether harvesting is performed and thus crop is received at a11 (when at least one crop presence sensor 64 gives an information that crop is present) or not (when no crop presence sensor 64 submits data indicating that crop is present). Thus, a sensor for detecting the location of a reel is superfluous, and disadvantages of such sensors, as inaccuracy, are avoided.

In figure 3, a vertical cross sectional view of the header 16 is given. A crop presence sensor 64 is located at the rear end of the bed 74 of the table of the header 16, and embedded into the surface of the bed 74. An alternative position of a crop presence sensor is indicated with 64'; this crop presence sensor 76 is embedded into a stone ridge 76 at the forward end of the bed 74, behind the knives 58.

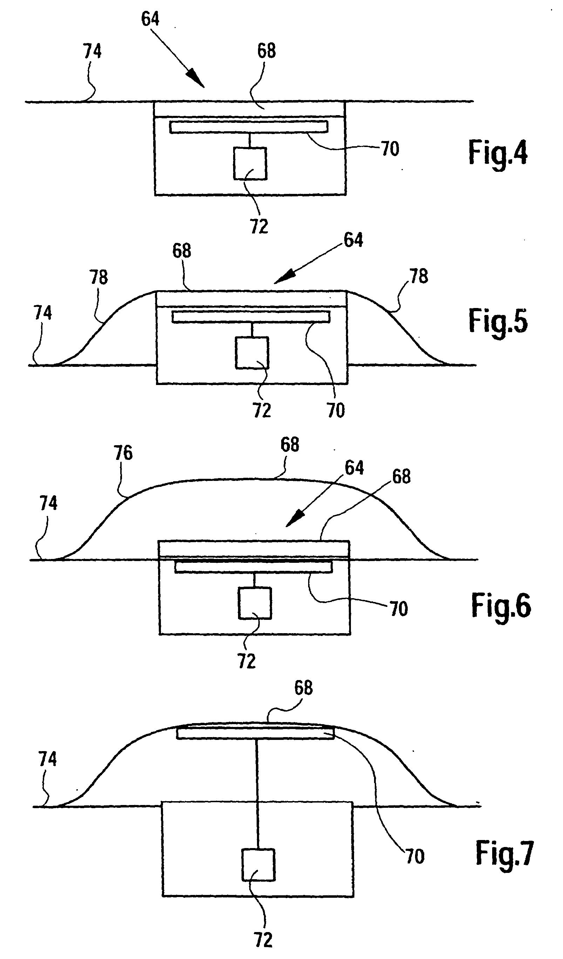

Preferably, the crop presence sensors 64 are capacitive sensors. Such sensors are available from Carlo Gavazzi Industri A/S, Over Hadstenvej 38, 8370 Hadsten, Denmark, order number EC 5525PPAP. An embodiment of a capacitive crop presence sensor 64 is shown in more detail in figure 4. The crop presence sensor 64 is embedded into the upper surface of the table of the header 16. The crop presence sensor 64 comprises a conductive foil 70 or plate mounted below an insulating (but not necessarily transparent) window 68 lying in the plane of the upper surface of the bed 74 of the table of the header 16. The foil 70 is electrically connected to a signal processor 72. When crop is present above the window 68, the electric capacity of the foil 70 measured against the header alters (increases). The signal processor 72 measures the electric capacity of foil 70. For example, the foil 70 is part of an electric resonance circuit, the resonance frequency of which is measured. Any other measurement of the capacity is possible, as well. The signal processor 72 thus provides an information regarding the presence of crop in the crop presence sensor's 64 vicinity to the processor 56.

In order to avoid that crop resting on the window 68 triggers the crop presence sensor 64, producing an error of the yield map, the crop presence sensor 64 is positioned on the bed 74 of the table of the header 16. Hence crop remaining on the window 68 is normally wiped away by passing crop. Alternatively or additionally, the output of the signal processor 72 is electrically processed removing the effect of any stationary material actuating the crop presence sensors 64. Thus, a time derivation of a value representing the capacity of foil 70 can be obtained and further processed.

In figure 5, another embodiment of a capacitive crop presence sensor 64 is given. It is located above the surface 74 of the table of the header. A ramp 78 in forward direction before and behind the crop presence sensor 64 keeps the surface of the crop presence sensor free of stationary material.

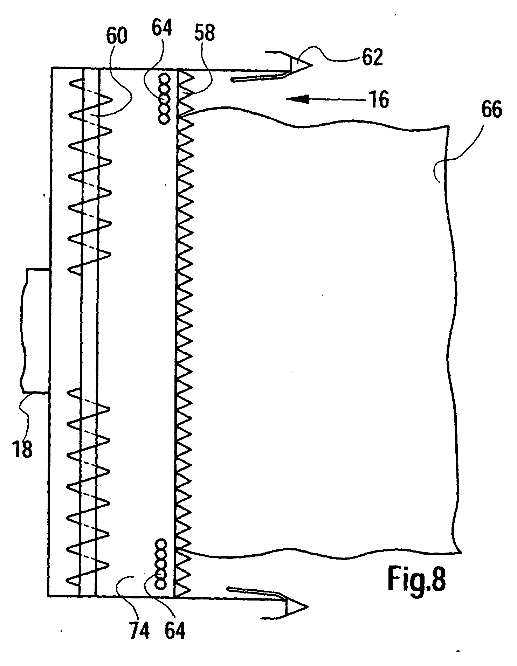

Figure 6 shows a third embodiment of a crop presence sensor 64, located below the stone ridge 76, and figure 7 represents a fourth embodiment of a crop presence sensor 64, integrated into the stone ridge 76, like the crop presence sensor 64' in figure 3. The elements of the crop presence sensors 64 of figures 5 to 7 are the same as those of the sensor shown in figure 4.

For either position 64 or 64' shown in figure 3, it is possible to make use of separate crop presence sensors 64 as indicated in figure 2. In another embodiment, as shown in figure 8, two arrays of crop presence sensors 64 are provided. A first array of crop presence sensors 64 is placed at the left-hand edge of the table. A second (optional) array of crop presence sensors 64 is placed against the right-hand end of the table. This arrangement of sensors operates like the one disclosed in figure 2, except when the swath width does not cover the sensor array or arrays the processor 56 records the width as zero. Both arrays of crop presence sensors 64 preferably cover a width of 0,2 to 1 m. Software is used to insert the missing data on the yield map by interpreting between adjacent runs where the table was nearly full. Thus, the yield is known more accurately than with the embodiment of figure 2, although a similar number of crop sensors 64 is used.

## Claims

1. An agricultural machine having a crop receiving and/or processing means arranged to receive and/or process crop, the machine comprising a crop width measuring means for measuring the width of crop received and/or processed by the crop receiving and/or processing means, the crop width measuring means comprising at least two crop presence sensors (64) having a detection range and providing data containing an information whether crop is in their detection range, wherein a plurality of the crop presence sensors (64) are distributed over the width of the crop receiving and/or processing means of the agricultural machine, **characterised in that** the crop presence sensors (64) are located in the plane of the surface of the crop receiving and/or processing means such that moving crop removes any stationary crop from the crop presence sensors (64).

2. An agricultural machine according to claim 1, **characterised in that** it is a header.

3. An agricultural machine according to claim 1 or 2, **characterised in that** at least one crop presence sensor (64) is connected to a signal processor (72) which electronically processes the signal of the crop presence sensor (64) removing the effect of any stationary crop actuating the crop presence sensor (64).

4. An agricultural machine according to one of claims 1 to 3, **characterised in that** at least one of the crop presence sensors (64) is a capacitive sensor.

5. An agricultural machine according to one of claims 1 to 4 in combination with an apparatus for collecting data concerning crop received and/or processed by the agricultural machine, the apparatus for collecting data comprising a location and/or distance measuring means for monitoring the geographical position of the agricultural machine in a field and/or the distance the machine has covered, a crop width measuring means for measuring the width of crop received and/or processed by the agricultural machine, and a processor (56) receiving data from the location and/or distance measuring means and from the crop width measuring means, wherein the processor is operable to establish a value which is dependent on the area from which crop was received and/or processed.

6. An agricultural machine according to claim 5, **characterised in that** it comprises a parameter measuring means for measuring a parameter of the received crop and that the processor (56) is operable to establish a map representative of a variable derived from the parameter at several locations of the field.

7. An agricultural machine according to claim 5 or 6, **characterised in that** the processor (56) determines according to the signal of the crop presence sensors (64) whether crop is received and/or cutting is performed at all.

8. An agricultural machine according to one of claims 5 to 7, wherein the agricultural machine is a combine and the crop presence sensors (64) are distributed over the width of a cutter bar (58) of a header (16) of the combine.

## Patentansprüche

1. Landwirtschaftliche Maschine mit einem Erntegutannahme- und/oder -verarbeitungsmittel, das eingerichtet ist, Erntegut anzunehmen und/oder zu verarbeiten, wobei die Maschine ein Erntegutbreitenmessmittel zur Messung der Breite vom Erntegutannahme- und/oder -verarbeitungsmittel angenommenen und/oder verarbeiteten Ernteguts umfasst, wobei das Erntegutbreitenmessmittel zumindest zwei Erntegutvorhandenseinssensoren (64) mit einem Nachweisbereich umfasst, die Daten bereitstellen, die eine Information darüber enthalten, ob sich Erntegut in ihrem Nachweisbereich befindet, wobei eine Vielzahl von Erntegutvorhandenseinssensoren (64) über die Breite der Erntegutannahme- und/oder -verarbeitungsmittel der landwirtschaftlichen Maschine verteilt sind, **dadurch gekennzeichnet, dass** die Erntegutvorhandenseinssensoren (64) in der Ebene der Oberfläche der Erntegutannahme- und/oder -verarbeitungsmittel angeordnet sind, so dass bewegendes Erntegut jegliches stationäre Erntegut von den Erntegutvorhandenseinssensoren (64) entfernt.

2. Landwirtschaftliche Maschine nach Anspruch 1, **dadurch gekennzeichnet, dass** sie ein Vorsatz ist.

3. Landwirtschaftliche Maschine nach Anspruch 1 oder 2, **dadurch gekennzeichnet, dass** zumindest ein Erntegutvorhandenseinssensor (64) mit einem Signalprozessor (72) verbunden ist, der das Signal vom Erntegutvorhandenseinssensor (64) elektronisch verarbeitet, wobei der Effekt jeglichen stationären Ernteguts beseitigt wird, der den Erntegutvorhandenseinssensor (64) betätigt.

4. Landwirtschaftliche Maschine nach einem der Ansprüche 1 bis 3, **dadurch gekennzeichnet, dass** wenigstens einer der Erntegutvorhandenseinssensoren (64) ein kapazitiver Sensor ist.

5. Landwirtschaftliche Maschine nach einem der Ansprüche 1 bis 4 in Kombination mit einem Gerät zur Sammlung von Daten, die durch die landwirtschaftliche Maschine angenommenes und/oder verarbeitetes Erntegut betreffen, wobei das Gerät zur Sammlung von Daten ein Orts- und/oder Entfernungsmessgerät zur Überwachung der geografischen Position der landwirtschaftlichen Maschine auf einem Feld und/oder die von der Maschine abgedeckten Entfernung, ein Erntegutbreitenmessmittel zur Messung der Breite des von der landwirtschaftlichen Maschine angenommenen und/oder verarbeiteten Ernteguts und einen Prozessor (56) umfasst, der Daten vom Orts- und/oder Entfernungsmessgerät und vom Erntegutbreitenmessmittel annimmt, wobei der Prozessor (56) betreibbar ist, einen Wert zu ermitteln, der von der Fläche abhängt, von der Erntegut angenommen und/oder verarbeitet wurde.

6. Landwirtschaftliche Maschine nach Anspruch 5 , **dadurch gekennzeichnet, dass** sie ein Parametermessmittel zur Messung eines Parameters des angenommenen Ernteguts umfasst und dass der Prozessor (56) betreibbar ist, eine Karte zu erzeugen, die eine vom Parameter an mehreren Stellen des Felds abgeleitete Variable repräsentiert.

7. Landwirtschaftliche Maschine nach Anspruch 5 oder 6, **dadurch gekennzeichnet, dass** der Prozessor (56) anhand des Signals des Erntegutvorhandenseinssensors (64) feststellt, ob überhaupt Erntegut angenommen und/oder Schneiden durchgeführt wird.

8. Landwirtschaftliche Maschine nach einem der Ansprüche 5 bis 7, **dadurch gekennzeichnet, dass** die landwirtschaftliche Maschine ein Mähdrescher ist und dass die Erntegutvorhandenseinssensoren (64) über die Breite eines Schneidbalkens (58) eines Vorsatzes (16) des Mähdreschers verteilt sind.

## Revendications

1. Machine agricole comportant des moyens de réception et/ou de traitement de récolte agencés pour recevoir et/ou traiter une récolte, la machine comprenant des moyens de mesure de largeur de récolte pour mesurer la largeur d'une récolte reçue et/ou traitée par les moyens de réception et/ou traitement de récolte, les moyens de mesure de largeur de récolte comprenant au moins deux capteurs de présence de récolte (64) ayant une plage de détection et fournissant des données contenant une information indiquant si une récolte est dans leur plage de détection, une pluralité des capteurs de présence de récolte (64) étant répartis sur la largeur des moyens de réception et/ou de traitement de récolte de la machine agricole, **caractérisée en ce que** les capteurs de présence de récolte (64) sont situés dans le plan de la surface des moyens de réception et/ou de traitement de récolte de sorte qu'une récolte mobile éloigne toute récolte immobile des capteurs de présence de récolte (64).

2. Machine agricole selon la revendication 1, **caractérisée en ce qu'**il s'agit d'une table de coupe.

3. Machine agricole selon la revendication 1 ou 2, **caractérisée en ce qu'**au moins un capteur de présence de récolte (64) est connecté à un processeur de signal (72) qui traite électroniquement le signal du capteur de présence de récolte (64) retirant l'effet de toute récolte immobile actionnant le capteur de présence de récolte (64).

4. Machine agricole selon l'une des revendications 1 à 3, **caractérisée en ce qu'**au moins l'un des capteurs de présence de récolte (64) est un capteur capacitif.

5. Machine agricole selon l'une des revendications 1 à 4 en combinaison avec un dispositif pour collecter des données concernant une récolte reçue et/ou traitée par la machine agricole, le dispositif pour collecter des données comprenant des moyens de mesure d'emplacement et/ou de distance pour surveiller la position géographique de la machine agricole dans un champ et/ou la distance parcourue par la machine, des moyens de mesure de largeur de récolte pour mesurer la largeur d'une récolte reçue et/ou traitée par la machine agricole, et un processeur (56) recevant des données des moyens de mesure d'emplacement et/ou de distance et des moyens de mesure de largeur de récolte, dans laquelle le processeur peut être mis en oeuvre pour établir une valeur qui est fonction de la surface de laquelle une récolte a été reçue et/ou traitée.

6. Machine agricole selon la revendication 5, **caractérisée en ce qu'**elle comprend des moyens de mesure de paramètre pour mesurer un paramètre de la récolte reçue et **en ce que** le processeur (56) peut être mis en oeuvre pour établir une carte représentative d'une variable déduite du paramètre à plusieurs emplacements du champ.

7. Machine agricole selon la revendication 5 ou 6, **caractérisée en ce que** le processeur (56) détermine, en fonction du signal des capteurs de présence de récolte (64), si une récolte est reçue et/ou une coupe est effectuée le cas échéant.

8. Machine agricole selon l'une des revendications 5 à 7, dans laquelle la machine agricole est une moissonneuse-batteuse et les capteurs de présence de récolte (64) sont répartis sur la largeur d'une barre de coupe (58) d'une table de coupe (16) de la moissonneuse-batteuse.
